Europäisches Patentamt

European Patent Office

Office européen des brevets

(11) Numéro de publication: **0 235 465 B1**

## (12) FASCICULE DE BREVET EUROPEEN

(45) Date de publication de fascicule du brevet: **20.05.92** (51) Int. Cl.⁵: **H05B 7/06**

(21) Numéro de dépôt: **86400309.0**

(22) Date de dépôt: **13.02.86**

(54) **Dispositif de connexion électrique destiné à être placé en paroi d'un four métallurgique à courant continu.**

(43) Date de publication de la demande:
**09.09.87 Bulletin 87/37**

(45) Mention de la délivrance du brevet:
**20.05.92 Bulletin 92/21**

(84) Etats contractants désignés:
**AT BE CH DE GB IT LI LU NL SE**

(56) Documents cités:
EP-A- 0 058 817      DE-A- 3 011 045
DE-C- 282 162        FR-A- 1 538 996
FR-A- 2 577 311      US-A- 1 645 091
US-A- 2 877 282

(73) Titulaire: **INSTITUT DE RECHERCHES DE LA SIDERURGIE FRANCAISE (IRSID)
Voie Romaine B.P. 64
F-57210 Maizières-lès-Metz(FR)**

(72) Inventeur: **Michelet, Jacques
19, rue du Fort
F-57050 Longeville-lès-Metz(FR)**
Inventeur: **Maurer, Ghislain
2, rue des Anémones
F-57070 Metz(FR)**

(74) Mandataire: **Ventavoli, Roger et al
INSTITUT DE RECHERCHES DE LA SIDERUR-
GIE FRANCAISE (IRSID) Station d'Essais
Boîte Postale 64
F-57210 Maizières-lès-Metz(FR)**

Rank Xerox (UK) Business Services
(3.08/2.19/2.0)

# Description

La présente invention a pour objet un dispositif de connexion électrique destiné à être placé en paroi d'un four métallurgique électrique à courant continu.

Plus précisément, il s'agit d'un dispositif de connexion électrique implanté au travers du revêtement réfractaire d'un four, le plus souvent dans le fond. Une extrémité du dispositif est mise au contact d'une masse métallique en fusion contenue dans le four, par exemple un bain d'acier, tandis que son autre extrémité est reliée à une borne d'une alimentation électrique de tension continue. L'autre borne de l'alimentation est classiquement reliée à une ou plusieurs électrodes mobiles en graphite, placées le plus souvent à faible distance au-dessus du bain métallique afin de créer et d'entretenir entre-elles et la surface du bain des arcs électriques qui apportent l'énergie thermique nécessaire à la fusion et l'élaboration du métal.

De tels dispositifs de connexion électrique sont connus en sidérurgie en tant qu'électrode de sole, en particulier dans les poches de traitement ou de maintien en température, ou encore dans les fours à arcs pour la fusion de matières solides métallifères.

L'un des problèmes essentiels rencontrés dans ce domaine concerne la tenue dans le temps de ces électrodes de sole qui sont soumises à des contraintes thermiques sévères, en raison de leur contact avec le bain métallique en fusion et des intensités élevées de courant électrique qui les traverse, notamment dans les cas des fours à arcs où ces intensités peuvent atteindre des valeurs de l'ordre de 40 000 A, voire plus.

Le demandeur, qui a beaucoup étudié ces problèmes, a proposé, dans la demande de brevet français n° 84/17323 du 06 novembre 1984, une électrode de sole pour four à arcs à courant continu, particulièrement bien adaptée à des périodes de fonctionnement de très longue durée. Cette électrode de sole comprend essentiellement une âme en acier, traversant la paroi du four pour venir par une extrémité au contact de la masse métallique en fusion contenue dans le four, et dont l'autre extrémité est enveloppée dans un manchon en matériau thermo et électro-conducteur, avantageusement en cuivre. Ce manchon, refroidi par circulation d'eau, entoure à distance l'âme de manière à ménager entre eux un espace de séparation. Celui-ci est cycliquement comblé à "chaud", c'est-à-dire lors de la mise en service du four, puis reformé "à froid", lorsque l'âme se refroidit après coupure de courant. De cette manière, on contribue à laisser l'âme en acier se dilater et se contracter longitudinalement à l'intérieur du manchon au rythme des séquences de refusion-resolidification répétitives de sa portion non refroidie traversant le revêtement réfractaire du four et qui résultent de la marche discontinue de ce dernier.

En outre, l'âme en acier est prolongée à son extrémité manchonnée par un embout en matériau thermo et électro-conducteur, qui, comme le manchon, est avantageusement en cuivre refroidi par une circulation interne d'un fluide de refroidissement et relié à une borne d'une alimentation électrique.

Ce type d'électrode de sole donne d'excellents résultats. Toutefois, on a pu observer à l'aide d'un capteur de déplacement que, au cours des périodes d'arrêt du four, l'âme et l'embout qui lui est solidaire se comportaient comme une partie coulissante qui remontait dans le manchon, et que cette remontée se reproduisant séquentiellement au fil des cycles de refusion-resolidification pouvant conduire à la disparition progressive de l'électrode de sole par consommation de son extrémité au contact du bain métallique.

La présente invention a pour but de résoudre ce problème et ainsi, d'améliorer encore la tenue dans le temps de l'électrode de sole.

A cet effet, l'invention a pour objet un dispositif de connexion électrique, destiné à être placé en paroi -généralement le fond- d'un récipient métallurgique, notamment un four à arc sidérurgique, dispositif du type comprenant :

- une partie interne constituée par une âme métallique affleurant par une extrémité la surface intérieure du four et prolongée à l'autre extrémité par un embout qui lui est solidaire,
- un manchon, en matériau thermoconducteur présentant un circuit de refroidissement et entourant ladite partie interne,
- et des moyens pour connecter l'âme à une alimentation électrique sous tension,
    dispositif de connexion électrique caractérisé en ce qu'il présente :
- un espace de séparation, ménagé entre le manchon et l'âme métallique, de manière à prendre en compte les phénomènes de dilatation-contraction de l'âme métallique dans le manchon,
- et un système de fixation élastique de ladite partie interne qui tend à ramener à tout instant cette dernière à sa position initiale donnée lors du montage.

Conformément à un mode de réalisation préféré de l'invention, l'embout est en un matériau à la fois thermo et électro-conducteur, avantageusement en cuivre ou en alliage cuivreux, et est refroidi énergiquement par une circulation interne d'un fluide refroidissant, par exemple de l'eau.

Dans ce cas, l'embout est avantageusement relié à une borne de l'alimentation électrique et assure ainsi la connexion électrique de l'âme métallique.

Conformément à une variante du mode de réalisation précité, le manchon est également en matériau électroconducteur, ce qui lui permet d'assurer latéralement la connexion électrique de l'âme métallique lorsque cette dernière vient en contact "à chaud" avec le manchon.

Comme on l'aura sans doute compris, le système de fixation élastique assure, lors des phases de refusion, le rétablissement de l'âme métallique et de l'embout à une position constante donnée au montage, et ceci d'autant plus facilement qu'ils peuvent coulisser dans le manchon.

Dans le seul but de mieux faire comprendre l'invention, on va essayer de décrire ce qui se passe au niveau de l'électrode au cours d'un cycle de resolidification-refusion de l'âme, sans que l'on puisse pour autant considérer que les phénomènes réels soient tous parfaitement élucidés.

Il faut d'abord se rappeler qu'un four à arc, qu'il soit à courant alternatif ou à courant continu, présente généralement sur le fond, à l'intérieur, une petite cuvette dans laquelle est conservée, après chaque coulée, une petite quantité de métal, appelé "pied de bain", et destinée à faciliter le redémarrage de la fusion d'une nouvelle charge. Bien entendu, dans le cas d'un four à arc à courant continu, le pied de bain ne peut remplir son rôle que si l'électrode de sole débouche dans la cuvette.

Ce rappel fait, on comprend mieux qu'à "froid", c'est-à-dire pendant les séquences d'arrêt du four entre deux fusions, le pied de bain qui, en se solidifiant, prend un appui fixe contre le fond de la cuvette, provoque de ce fait, lors de la contraction thermique de l'âme qui se refroidit progressivement, une remontée de cette dernière dans le manchon. On a ainsi constaté en fin de cycle de refroidissement des retreints longitudinaux de la partie mobile de l'électrode de sole pouvant atteindre plusieurs mm.

Pendant cette même période, suite cette fois à la contraction radiale de l'âme métallique, l'espace de séparation ménagé entre celle-ci et le manchon refroidi se reconstitue, ce qui autorise la remontée de l'âme par coulissement. Cette remontée de l'âme métallique dans le manchon s'accompagne d'une mise en contrainte du système de fixation élatique, (mise en compression ou en extension selon qu'il s'agit d'un système à ressorts à compression ou de traction).

Par contre "à chaud", c'est-à-dire quand le four métallurgique est mis sous tension, on assiste tout d'abord à la fusion du pied de bain. La fusion se poursuit ensuite dans la partie supérieure de l'âme non refroidie qui est enfouie dans le réfractaire de la sole du récipient.

Ceci a pour conséquence la disparition d'une grande partie des points d'ancrage de l'âme métallique dans le réfractaire apparus lors de la solidification précédente. Toutefois, ceci n'est généralement pas suffisant en soi pour que la partie mobile retrouve, sous l'effet de son propre poids, sa position initiale donnée au montage.

Le système de fixation élastique, encore sous contraintes en raison du retreint précédent retrouve alors son état d'équilibre, et, en repoussant l'âme vers l'extérieur du four, ramene celle-ci à sa position de départ.

A ce propos, on notera que la présence d'un espace de séparation ménagé entre l'âme métallique et le manchon facilite avantageusement l'action de rappel du système de fixation. En effet, le métal de l'âme en s'échauffant comble cet espace par dilatation radiale, tout en perdant de sa consistance, donc sans jamais exercer sur le manchon une pression latérale telle que l'action de rappel du système de fixation soit empêchée. Il n'est cependant pas impossible que le système élastique puisse exercer son action de rappel avant que la dilatation radiale de l'âme comble entièrement l'espace de séparation avec le manchon. Le mécanisme exact reste à préciser, car il dépend de plusieurs facteurs comme la taille de l'âme, la puissance de l'effort antagoniste du système de rappel, l'épaisseur du revêtement réfractaire, etc. . .

Néanmoins, le système de fixation élastique associé à la présence "à froid" d'un espace de séparation entre l'âme métallique et le manchon, permettent à cette dernière à coup sûr de retrouver à chaque refusion sa position de départ, ce qui empêche toute possibilité de consommation de l'âme par un effet de cumul des retreints longitudinaux dans le manchon.

D'autres avantages et caractéristiques apparaîtront au vu de la description qui va suivre, donnée à titre d'exemple, en référence aux planches de dessins annexées sur lesquelles :

- la figure 1 représente en section longitudinale une vue schématique d'ensemble d'un four à arc sidérurgique équipé dans son fond d'un dispositif de connexion selon l'invention.

- la figure 2 représente, en coupe longitudinale, une vue agrandie de ce dispositif de connexion.

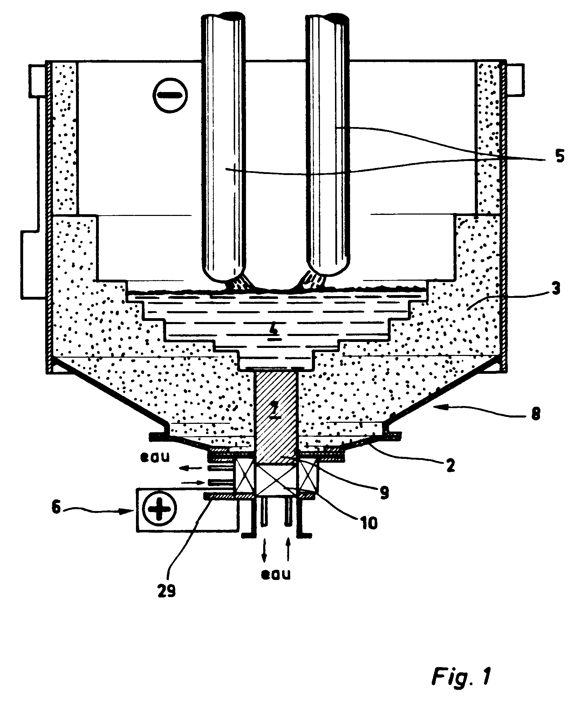

Le four à arc schématisé sur la figure 1 comprend une carapace métallique 2 garnie intérieurement d'un revêtement réfractaire 3.

Une masse métallique 4 vient d'être fondue dans ce four grâce aux arcs électriques entretenus entre cette masse et l'extrémité d'électrodes de voûte en graphite 5 (au nombre de deux dans cet exemple) reliées à la même borne négative d'une alimentation électrique en courant continu non représentée. La fermeture du circuit électrique s'opère au travers du bain entre ces électrodes et le dispositif de connexion 6 selon l'invention. Ce dispositif comporte, comme on le voit, une âme métallique 7 formée d'une simple billette en acier, implantée au travers du fond 8 du four de manière à ce que son extrémité supérieure vienne au contact de la masse de fusion. Ce contact s'opère classiquement à la base d'une cuvette ménagée en un point bas du four dans laquelle est conservée en permanence du métal, habituellement dénommé "pied de bain" et destiné à faciliter le démarrage de la fusion sur charge solide.

A l'opposé, la billette 7 est prolongée à sa partie inférieure 9 par un embout vissé 10 en cuivre, refroidi par circulation interne d'eau.

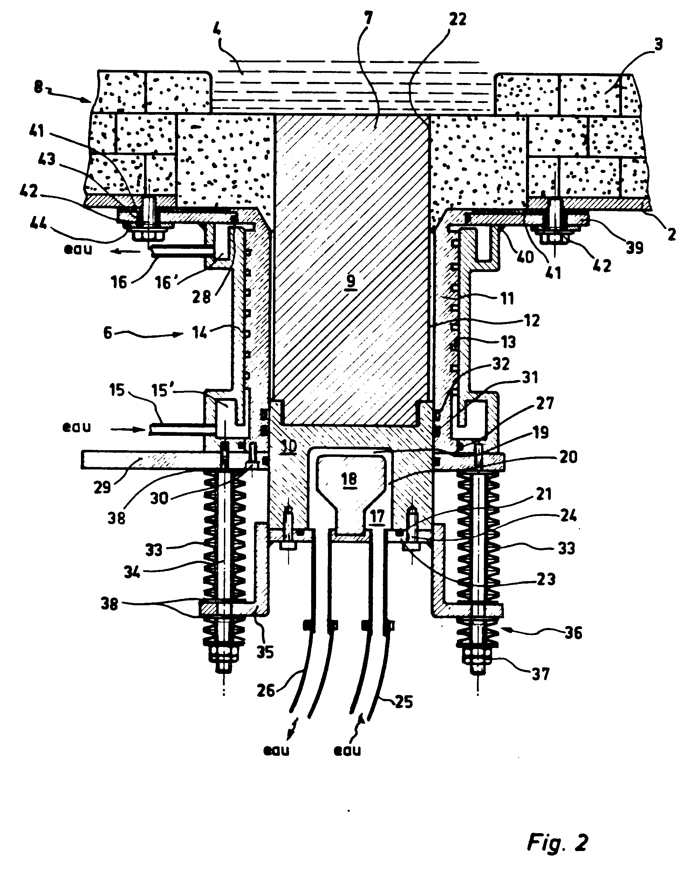

Comme on le voit de façon précise sur la figure 2, la partie inférieure 9 de la billette et la partie supérieure de l'embout 10 sont enveloppés dans un manchon 11, en cuivre refroidi, qui entoure à distance la billette 7, de manière à ménager entre eux un espace de séparation 12 qui sera comblé principalement par dilatation radiale de la billette, lors de la mise sous tension du four.

Par contre, entre le manchon 11 et l'embout 10, refroidis tous deux, il ne subsiste qu'un jeu mécanique afin que l'embout 10 puisse coulisser dans le manchon 11.

Dans l'exemple décrit, la longueur de la portion terminale manchonnée 9 de la billette 7 est prévue juste suffisante pour que, lors des cycles de dilatation et retraction longitudinales de l'âme 7, le coulissement de l'embout 10 s'effectue toujours à l'intérieur du manchon 11, soit cuivre contre cuivre.

Par ailleurs, dans l'exemple présenté, la billette 7, le manchon 11 et l'embout 10 sont de section circulaire.

Le refroidissement, de la billette 7 est ici assuré à la fois par le manchon 11 et par l'embout 10.

Ainsi, le manchon 11 comporte sur sa surface latérale externe des cannelures 13 helicoïdales et parallèles entre elles.

La fermeture étanche de ces cannelures est réalisée au moyen d'une chemise métallique 14 appliquée sur le manchon 11 et pourvue à ses extrémités de moyens d'entrée 15, 15′ et de sortie 16, 16′ du fluide de refroidissement, qui est avantageusement de l'eau déminéralisée.

L'embout 10 est évidé dans sa partie inférieure de manière à présenter une cavité 17 sensiblement cylindrique, ouverte à son extrémité inférieure. Un noyau métallique 18 est logé dans la cavité 17. Ce noyau de forme générale cylindrique, présente en surface des cannelures rectilignes frontales 19 et latérales 20 pour la circulation d'eau de refroidissement.

La fermeture étanche de la cavité 17 est assurée au moyen de la plaque métallique 23, montée contre l'extrémité inférieure de l'embout 10, à l'aide de vis 24 et avec interposition d'un joint torique 21. La plaque 23 est percée de deux orifices pour le raccord étanche des entrée et sortie d'eau 25 et 26.

L'étanchéité hydraulique de l'assemblage manchon-chemise est assurée par des joints toriques 27 et 28 disposés respectivement aux extrémités supérieure et inférieure du manchon 11.

La connexion électrique de la billette 7, s'effectue conjointement par l'intermédiaire du manchon 11 et de l'embout 10. Ceux-ci constituent ainsi les deux branches en parallèle d'un circuit électrique de connexion de l'âme, circuit complété par une plaque 29 en cuivre, reliée à une borne d'une alimentation électrique non représentée, est prévue pour être en contact à la fois avec le manchon 11 et l'embout 10.

La plaque 29, qui comporte une ouverture pour le passage de l'embout 20, est fixée contre l'extrémité inférieure du manchon 11 au moyen de boulons 30.

Dans le but de conserver un jeu mécanique suffisant pour permettre un coulissement de la partie interne 7, 10, des contacts électriques glissants sont prévus entre l'embout 10 et le manchon 11 de la plaque 29.

Dans le mode de réalisation présenté, ces contacts électriques sont constitués par trois couronnes annulaires 31 en cuivre, formés d'éléments du type "ressort à lames", chaque couronne étant insérée dans une rainure annulaire 32 ménagée à la surface périphérique interne du manchon 11 et de la plaque de connexion 29 de manière que la partie souple de la couronne 31 soit en contact élastique permanent avec la surface latérale de l'embout 10.

Conformément à une caractéristique importante de l'invention, un système de fixation élastique de la partie coulissante 7,10 est prévu capable lors de la refusion (mise sous tension du four électrique), de ramener cette partie (à savoir la billette 7 et l'embout 10 qui lui est solidaire) à la position de départ donnée lors du montage.

Dans le mode réalisation présentée sur la figure 2, le système de fixation élastique comprend principalement des ressorts à compression constitués par des rondelles métalliques 33 de forme conique, dites rondelles "Belleville", empilées en opposition de conicité deux à deux. Ces ressorts sont montés autour de colonne de guidage 34 et viennent en appui par leurs extrémités, d'un côté contre une butée mobile 35 solidaire de la partie coulissante 7,10 et de l'autre, contre une butée fixe, donc solidaire de la carapace 2 du four et située entre cette carapace et la butée mobile.

Dans la réalisation exemplifiée, la butée fixe est constituée par la plaque 29 de connexion électrique elle- même, alors que la butée mobile est formée par une portée coulissante 35 rapportée par soudure à la plaque 23 qui ferme la cavité 17 de l'embout 10.

Les colonnes 34 sont fixées par vissage de leur extrémité dans la plaque de connexion 29. A leur autre extrémité, laissée libre, un amortisseur 36 est avantageusement prévu, constitué également d'un empilage de rondelles "Belleville". Cet empilage est monté entre la portée 35 coulissant le long de la colonne de guidage 34 et un écrou de serrage 37 permettant de régler la mise en compression initale des ressorts. De préférence des rondelles planes d'appui 38 sont prévues aux extrémités de chaque ressort.

La fixation de l'ensemble du dispositif selon l'invention contre la carapace 2 du four est réalisée au moyen de la plaque de fond 39 à laquelle est solidement rapportée, par un cordon de soudure 40, la chemise 14. Cette plaque 39 est elle-même fixée sous la carapace 2 avec interposition d'une plaquette isolante de l'électricité 41. Des passages sont ménagés à cet effet dans la plaque de fond 39 et dans la plaque 41 pour l'introduction de vis 42 de fixation sur la carapace 2 du four. Afin de conserver l'isolation électrique de la carapace 2 du four, on introduit, dans chaque passage aménagé pour les vis 42, un canon 43 isolant électrique complété par une rondelle isolante 44.

Bien entendu, l'invention n'est nullement limitée au mode de réalisation décrit ci-dessus et s'étend à de multiples variantes dans la mesure où sont respectées les caractéristiques énoncées dans les revendications jointes.

Ainsi, les contacts électriques 31 constitués par des couronnes annulaires en cuivre formées d'éléments du type "ressort à lames" ne sont pas nécessairement en appui élastique contre l'embout 10, mais bien entendu peuvent être en appui élastique contre le manchon 11 et contre la plaque de cuivre 29, les rainures dans lesquelles ces couronnes sont logées étant, dans ce cas, ménagées à la surface latérale de l'embout.

Par ailleurs, ont peut songer à utiliser comme connecteur électrique de la billette d'acier d'autres moyens, différents de celui présenté auparavant et constitué par la plaque en cuivre 29 placée à la base du manchon 11.

Par exemple, on peut utiliser comme connecteur électrique la plaque de fixation 39 elle-même, que l'on prévoit dans ce cas avantageusement en cuivre.

En ce qui concerne, la fixation élastique de la partie coulissante 7,10, ont peut envisager d'autres modes de réalisation que celui présenté. On peut par exemple remplacer le système à ressort à compression constituée par l'empilage des rondelles "Belleville" 33 par un système à ressort de traction qui serait mis en extension par retreint de l'âme lors de ses resolidifications. Dans ce cas, c'est bien entendu la butée mobile 35 qui devra être placée entre la carapace 2 du four et la butée fixe des ressorts.

## Revendications

1. Dispositif de connexion électrique destiné à être placé en paroi d'un récipient métallurgique électrique à courant continu, notamment un four à arc sidérurgique, dispositif du type comprenant :
   - une partie interne constituée par une âme métallique (7) affleurant par une extrémité la surface intérieure du four et prolongée à son autre extrémité par un embout (10) qui lui est solidaire ;
   - un manchon (11) en matériau thermoconducteur qui entoure ladite partie interne (7, 10), ce manchon étant fixé à la carapace (2) du four et présentant un circuit (13) de circulation d'un fluide de refroidissement ;
   - et des moyens (20, 31) pour connecter l'âme métallique à une alimentation électrique ;
       dispositif caractérisé en ce qu'il présente :
   - un espace de séparation (12), ménagé entre la manchon (11) et l'âme métallique (7), de manière à prendre en compte les phénomènes de dilatation-contraction de l'âme dans le manchon;
   - et un système de fixation élastique de partie interne (7, 10) qui tend à repousser à tout instant cette dernière hors du four de manière à ramener cette dernière à sa position initiale donnée lors du montage.

2. Dispositif de connexion électrique selon la revendication 1 caractérisé en ce que ledit système de fixation élastique est constitué d'un ensemble à ressorts, montés entre une butée fixe (29) solidaire du four et une butée mobile (35) solidaire de ladite partie interne (7, 10).

3. Dispositif de connexion électrique selon la revendication 2 caractérisé en ce que lesdit ressorts sont du type à compression et en ce que ladite butée fixe (29) est située entre la carapace (2) du four et ladite butée mobile (35).

4. Dispositif de connexion électrique selon la revendication 2 ou 3, caractérisé en ce que lesdits ressorts sont montés autour de colonnes (34) de guidage de la butée mobile (35).

5. Dispositif selon la revendication 4 caractérisé en ce que ladite butée mobile est constituée par une portée (35) coulissante le long des colonnes de guidage (34) et fixée à l'embout (10).

6. Dispositif selon la revendication 3 caractérisé en ce que les ensembles à ressorts sont constitués par des empilages (33) de rondelles métalliques de forme conique.

7. Dispositif selon la revendication 2, caractérisé en ce que des amortisseurs (36) sont prévus dans le prolongement des ensembles à ressorts, au delà des butée mobiles (35).

8. Dispositif de connexion électrique selon la revendication 1 caractérisé en ce que l'embout (10) est en matériau bon conducteur de l'électricité, en ce que l'âme métallique (7) est reliée à l'alimentation électrique par l'intermédiaire dudit embout et en ce que ce dernier comporte un circuit interne (19, 20) de circulation d'un fluide de refroidissement.

9. Dispositif de connexion électrique selon la revendication 6, caractérisé en ce que le manchon (11) est également en matériau bon conducteur de l'électricité et en ce que des moyens (29) sont prévus pour relier l'embout (10) à la même borne de l'alimentation électrique que le manchon (11) de manière que l'embout (10) et le manchon (11) constituent deux branches en parallèle d'un circuit électrique de connexion de l'âme métallique (7).

**Claims**

1. Electrical connection device intended to be placed in the wall of an electrical direct-current metallurgical vessel, especially a metallurgical arc furnace, this device being of the type comprising:
   - an inner part consisting of a metal core (7) which at one end is flush with the inner surface of the furnace and at its other end is extended in the form of a connector (10) integral therewith,
   - a sleeve (11) made of thermally conductive material which surrounds the said inner part (7,10), this sleeve being fastened to the shell (2) of the furnace and having a cooling-fluid circulation circuit (13),
   - and means (20,31) of connecting the metal core to an electrical supply,
   this device being characterized in that it has:
   - a separation space (12) formed between the sleeve (11) and the metal core (7), to allow for the phenomena of expansion and contraction of the core in the sleeve,
   - and an elastic fastening system for the inner part (7,10), which tends to push back the latter at any moment outside the furnace so as to return the latter to its initial position determined during assembly.

2. Electrical connection device according to Claim 1, characterized in that the said elastic fastening system consists of an assembly of springs mounted between a fixed stop (29) integral with the furnace and a movable stop (35) integral with the said inner part (7,10).

3. Electrical connection device according to Claim 2, characterized in that the said springs are of the compression type, and in that the said fixed stop (29) is located between the shell (2) of the furnace and the said movable stop (35).

4. Electrical connection device according to Claim 2 or 3, characterized in that the said springs are mounted round guide columns (34) for the movable stop (35).

5. Device according to Claim 4, characterized in that the said movable stop consists of a bearing (35) sliding along the guide columns (34) and fastened to the connector (10).

6. Device according to Claim 3, characterized in that the spring assemblies consist of stacks (33) of conical metal washers.

7. Device according to Claim 2, characterized in that shock absorbers (36) are provided in the extension of the spring assemblies beyond the movable stops (35).

8. Electrical connection device according to Claim 1, characterized in that the connector (10) is made of a material which is a good conductor of electricity, in that the metal core (7) is connected to the electrical supply by means of the said connector, and in that the latter has an inner cooling-fluid circulation circuit (19,20).

9. Electrical connection device according to Claim 6, characterized in that the sleeve (11) is likewise made of a material which is a good conductor of electricity, and in that means (29) are provided for connecting the connector (10) to the same terminal of the electrical supply as the sleeve (11), so that the connector (10) and the sleeve (11) form two parallel branches of an electrical circuit connecting the metal core (7).

**Patentansprüche**

1. Elektrische Verbindungsvorrichtung zum Abringen in die Wand eines metallurgischen, elektrischen Gleichstrombehälters, insbesondere eines Lichtbogenofens der Hüttenindustrie, welche Vorichtung von derjenigen Art ist, welche aufweist:
   - einen von einem Metallkern gebildeten Innenteil, der an einem Ende in die Innenfläche des Ofens bündig eingelassen und an seinem anderen Ende durch einen mit ihm fest verbundenen Ansatz verlängert ist;
   - eine Muffe (11) aus wärmeleitendem Material, die den Innenteil (7, 10) umgibt, welche Muffe an der Panzerung (2) des Ofens befestigt ist und einen Kreis (13) für die Zirkulation eines Kühlfluides aufweist;
   - und Einrichtungen (20, 31) zum Anschließen des Metallkernes an eine elektrische Versorgung;
   welche Vorrichtung dadurch gekennzeichnet ist, daß sie aufweist:
   - einen Trennspalt (12), der derart zwischen der Muffe und dem Metallkern (7) ausgebildet ist, daß er Ausdehnungs- und Zusammenziehungsphänomenen des Kernes in der Muffe Rechnung trägt;
   - und ein elastisches Befestigungssystem für den Innenteil (7, 10), welches dazu neigt, den letzteren jederzeit aus dem Ofen zurückzustoßen, so daß der letztere in seine ursprüngliche, während der Montage gegebene Position zurückgeholt wird.

2. Elektrische Verbindungsvorrichtung nach Anspruch 1, dadurch gekennzeichnet, daß das elastische Befestigungssystem von einer Federeinheit gebildet ist, die zwischen einem fixen, mit dem Ofen fest verbundenen Anschlag (29) und einem beweglichen, mit dem Innenteil (7, 10) fest verbundenen Anschlag (35) montiert ist.

3. Elektrische Verbindungsvorrichtung nach Anspruch 2, dadurch gekennzeichnet, daß die Federn Druckfedern sind, und daß der fixe Anschlag (29) zwischen der Panzerung (2) des Ofens und dem beweglichen Anschlag (35) gelegen ist.

4. Elektrische Verbindungsvorrichtung nach Anspruch 2 oder 3, dadurch gekennzeichnet, daß die Federn rund um Führungssäulen (34) für den beweglichen Anschlag (35) montiert sind.

5. Vorrichtung nach Anspruch 4, dadurch gekennzeichnet, daß der bewegliche Anschlag von einer entlang den Führungssäulen (34) gleitenden und am Ansatz (10) fixierten Auflagefläche (35) gebildet ist.

6. Vorrichtung nach Anspruch 3, dadurch gekennzeichnet, daß die Federeinheiten von einem Stapel (33) konusförmiger Metallscheiben gebildet sind.

7. Vorrichtung nach Anspruch 2, dadurch gekennzeichnet, daß Dämpfer (36) in Verlängerung der Federeinheiten jenseits der beweglichen Anschläge (35) vorgesehen sind.

8. Elektrische Verbindungsvorrichtung nach Anspruch 1, dadurch gekennzeichnet, daß der Ansatz (10) aus einem elektrisch gut leitenden Material besteht, daß der Metallkern (7) über den Ansatz an die elektrische Versorgung angeschlossen ist, und daß der Ansatz einen inneren Kreis (19, 20) für die Zirkulation eines Kühlfluides aufweist.

9. Elektrische Verbindungseinrichtung nach Anspruch 6, dadurch gekennzeichnet, daß die Muffe (11) ebenfalls aus einem elektrisch gut leitenden Material besteht, und daß Einrichtungen (29) zum Verbinden des Ansatzes (10) an dieselbe elektrische Versorgungsklemme wie die Muffe (11) vorgesehen sind, so daß der Ansatz (10) und die Muffe (11) zwei zueinander parallele Zweige eines elektrischen Verbindungskreises für den Metallkern (7) darstellen.

Fig. 1

Fig. 2